# EUROPEAN PATENT SPECIFICATION

(11) **EP 1 345 985 B1**
(45) Date of publication and mention of the grant of the patent: **18.05.2011**
(21) Application number: 01983314.4
(22) Date of filing: 16.11.2001
(51) Int. Cl.: B29C 39/02, C08J 5/06, C08J 5/08, C08J 5/24, C08K 7/02, C08K 9/04, C08K 9/06

(54) **COUPLING OF REINFORCING FIBRES TO RESINS IN CURABLE COMPOSITES**
KOPPLUNG VON VERSTÄRKUNGSFASERN MIT HARZEN IN HÄRTBAREN VERBUNDWERKSTOFFEN
COUPLAGE ENTRE FIBRES DE RENFORCEMENT ET RESINES DANS DES COMPOSITES DURCISSABLES

(30) Priority: 17.11.2000 AU PR168800; 03.05.2001 AU PR476901; 04.07.2001 AU PR614001; 11.07.2001 AU PR630501
(43) Date of publication of application: 24.09.2003
(73) Proprietor: LICOTEC PTY LTD., Newcastle, New South Wales 2300 (AU)
(72) Inventor: Hodgson, Peter Clifford, Speers Point, New South Wales 2284 (AU)
(74) Representative: Ryan, Anne Mary
(86) International application number: PCT/AU2001/001484
(87) International publication number: WO 2002/040577

(56) References cited:
- EP-A- 0 578 043
- DE-A- 2 905 851
- US-A- 4 112 036
- US-A- 4 196 106
- US-A- 4 374 177
- US-A- 4 405 727
- US-A- 4 465 797
- US-A- 4 715 607
- US-A- 4 801 627
- US-A- 5 075 351
- US-A- 5 086 101
- US-A- 5 087 518
- US-A- 5 130 194
- US-A- 5 234 997
- US-A- 5 707 571
- US-A- 5 759 255
- US-A- 5 873 934
- US-A- 5 948 503
- US-A1- 2010 159 243
- SJOGREN A ET AL: "Effects of fibre coating (size) on properties of glass fibre/vinyl ester composites" COMPOSITES PART A: APPLIED SCIENCE AND MANUFACTURING, ELSEVIER SCIENCE PUBLISHERS B.V., AMSTERDAM, NL, vol. 30, no. 8, August 1999 (1999-08), pages 1009-1015, XP004167757 ISSN: 1359-835X
- SCHUTTE C L: "Environmental durability of glass-fiber composites" MATERIALS SCIENCE AND ENGINEERING R: REPORTS, ELSEVIER SEQUOIA S.A., LAUSANNE, CH, vol. 13, no. 7, 15 November 1994 (1994-11-15), pages 265-324, XP004012319 ISSN: 0927-796X
- PATENT ABSTRACTS OF JAPAN vol. 008, no. 232 (C-248), 25 October 1984 (1984-10-25) & JP 59 115343 A (SUWA SEIKOSHA KK), 3 July 1984 (1984-07-03)
- Anonymus: "Entry "E-Glass"", , Retrieved from the Internet: URL:http://grptubing.com/index.php?option= com_content&view=article&id=47&Itemid=107
- Arkles, B. et al.: "Factors contributing to the stability of alkoxysilanes in aqueous solutions" In: "Silanes and Other Coupling Agents", 1 January 1992 (1992-01-01) pages 91-104,

## Description

### Technical Field

This invention relates to a process for making a plurality of reinforcing fibres for reinforcing a curable resin and to reinforcing fibres so produced.

### Background Art

When fibre reinforced vinyl functional/free radical initiated resins such as Unsaturated Polyester or Vinyl Ester resins are applied to an open mould, they require mechanical consolidation to remove entrapped air. There are two reasons for removing air. The first is to optimize the mechanical strength of the composite, and the second is to improve the chemical resistance. This is also true for epoxy resin composite laminates.

The present art is to
1. spray chopped glass rovings into the resin fan before deposition, or
2. to apply sheets of fabric reinforcement to the mould and then to wet these out with resin, or
3. to pre impregnate the fabric reinforcement with resin prior to placing it on the mould.

All there procedures require some form of mechanical consolidation of the applied laminate to remove entrapped air.

In the current art it is not desirable that the fibres are intimately bonded to the resin matrix. All that is required is that there is sufficient bonding so that the applied stresses can be transmitted to the fibres:

A large proportion of the fibres are held in position by mechanical friction. They are free to slide relative to the resin matrix when the composite is strained sufficiently. One can hear this slipping with the aid of a microphone. When the composite ruptures there are an abundance of fibres protruding from the ruptured surfaces. The sizing on glass rovings interferes with glass to matrix bonding.

The reason the current art performs is due largely to the length of the fibres. Typically fibre length ranges from 12mm to tens of meters in the case of filament winding and pultrusion and woven rovings. If one hammer mills these reinforcements to less than 4mm and incorporates them into a UPE or VE laminating resin by conventional processes the resulting composite has poor physical properties.

Typically tensile strength is bellow 65MPa and it has minimal resistance to crack propagation.

The tensile strength of the resin matrix is greater than the tensile strength of the composite.

This comes about by the fact that the reinforcement is too short to be mechanically locked into the matrix. There is little resistance to crack propagation and such composites are not only weak but are also brittle and have very poor impact resistance.

In the literature there is mentioned the CRITICAL LENGTH of a fibre incorporated in a composite. For fibreglass, the critical length is about 2mm +- 1mm. The critical length is the minimum length of a bonded fibre that will break in a composite due to applied strain.

Crack propagation in short fibre composites is a problem, because using standard laminating resins stress fields are very concentrated. When rupture occurs in brittle matrix short fibre composites the component suffers brittle failure, the part having poor impact resistance.

### In summary

1. The current surface treatment of fibres is inadequate for short fibre composites.
2. Brittle laminating resins do not provide adequate impact resistance.
3. For optimum chemical/environmental resistance non air inhibited resins are preferred for method 2 composites.

Kennerley, J.R. et al (Composites Part A 29A (1998) 839-845) describe a fluidised bed process for recovering reinforcing glass fibres from scrap thermoset composites. The reclaimed, cleaned and then silane hydrolysate-treated glass fibres have been used as a partial and full replacement for virgin fibres in a dough moulding compound.

Larena, A et al (Materials Letters 12 (1992) 415-418) describe the leaching of E-glass fibres with HCl and its effect on the reaction of fibre with chlorosilanes. It was found that surface hydration increases the amount of polyvinylsiloxane coating formed when fibre reacts with vinyltrichlorosilane in refluxing toluene, but prevents the fibre from reacting with monochlorosilanes in toluene or aqueous solutions.

### Objects of the Invention

Objects of this invention include providing a process for making a plurality of reinforcing fibres for reinforcing

a curable resin.

### Disclosure of Invention

According to the invention there is provided a process for making a plurality of reinforcing fibres according to claim 1.

Each fibre so produced has a surface which is substantially coated with a polymerized coupling agent for coupling said fibre with a resin when cured so as to improve impact resistance, tensile strength and flexural strength of a cured composite comprising said resin when cured and said polymerized coupling agent incorporated in said cured resin.

The process according to the invention applies to glass fibres. References to other materials in the description have been retained for overall clarity thereof.

Depending on the type of fibre and the type of coupling agent it may be necessary to pretreat the surface of the fibre to enable it to be coated with the coupling agent For example, where the fibres comprise mica platelets such platelets are usually coated with a metal oxide coating (e.g. iron oxide or other metal oxide) prior to coating with the polymerizable hydrophilic coupling agent.

The process may further comprise the step of separating the plurality of fibers from the liquid.

The process may further comprise the step of sieving the separated plurality of fibers.

According to a further embodiment of this invention there is provided a reinforcing fibre for a curable resin made by the process of the invention.

Thus, there is provided a cured composite comprising:
a cured resin incorporating a plurality of reinforcing fibres each of said reinforcing fibres having a surface which is substantially coated with a coupling agent for coupling said fibre with the cured resin so as to improve impact resistance, tensile, and flexural strength of said cured composite, said coupling agent comprising a polymerized coupling agent

There is also provided a curable composite comprising:
a curable resin incorporating a plurality of reinforcing fibres each of said reinforcing fibres having a surface which is substantially coated with a coupling agent for coupling said fibre with the resin when cured so as to improve impact resistance flexural strength, and tensile strength of said composite when cured, said coupling agent comprising a polymerized coupling agent

A cured composite can be made comprising:
preparing a curable composite by combining a curable resin and a plurality of said reinforcing fibres each of said reinforcing fibres having a surface which is substantially coated with a coupling agent for coupling said fibre with the resin when cured so as to improve impact resistance, flexural and tensile strength of a cured composite comprising the cured resin, said coupling agent comprising a polymerized coupling agent; and curing said curable composite.

A method of applying a composite to a surface comprises:
preparing a curable composite by combining a curable resin and a plurality of said reinforcing fibres each of said reinforcing fibres having a surface which is substantially coated with a coupling agent for coupling said fibre with the cured resin so as to improve impact resistance, flexural strength and tensile strength of a cured composite comprising the cured resin, said coupling agent comprising a polymerized coupling agent;
applying the curable composite to the surface; and
curing said curable composite.

The step of applying can be by painting, pumping, brushing, wiping, streaking, pouring, rolling, spreading or other suitable applying methods used in fibreglass fabrication. By choosing fibres of mean length less than about 4mm the resin having said plurality of reinforcing fibres can be applied to the surface by spraying.

A composite as described herein can utilize fibres the maximum mean length of which is about 3-4mm more typically about 3mm (the composite can be pumpable and/or sprayed using current fibreglass deposition equipment a requirement That restricts mean fibre length to a maximum 4mm). A critical fibre length of the same order of magnitude was unacceptable for these particular applications. Thus for these applications it was of paramount importance to reduce the critical fibre length to under 1mm. This is achieved by improving coupling and reducing interfacial stresses by plasticizing the interface by thoroughly coating the fibre with silane coupling agents.

Preferably, the coupling agent is an organofunctional silane containing a carbon-carbon double bond.

A method of moulding a composite as described herein comprises:
preparing a curable composite by combining a curable resin and a plurality of said reinforcing fibres each of said reinforcing fibres having a surface which is substantially coated with a coupling agent comprising a polymerized coupling agent for coupling said fibres with the cured resin so as to improve impact resistance, tensile strength, and flexural strength of the composite when cured;
locating the curable composite in a mould; and
curing said curable composite in the mould.

The step of locating the curable composite in the mould may comprise pumping it, pouring it or otherwise placing it, in the mould. Where the moulding process involves injection moulding the step of locating the curable composite in the mould comprises injecting the curable composite into the mould.

This invention teaches the use of resins including flexible resins and resins with moderately high elongation at break to overcome the poor impact resistance.

Throughout this specification it is to be understood that a unique aspect regarding coupling agents used to coat the fibres in this patent is that coupling agents are polymerized before and/or during the coupling process. It is of paramount importance to have a preponderance of polymers adhering to the surface as the presence of these polymers effectively stress relieve the interface during curing of the composites which can be short fibre composites. Two or more different coupling agents may be used.

Usually the fibres do not have sizing agents of any sort on the surface of the fibres. In order to obtain such fibres from standard fiberglass fibres which come coated with sizing agents it is necessary to remove such sizing agents from the fibres before coating the fibres with a coupling agent. In addition, the density of coupling agents on the surface of the fibres is extremely high - usually the polymerization of the coupling agent is performed to a substantial extent. For example, the step of polymerizing the coupling agent comprises polymerizing the coupling agent for a period in the range 5 -60 hours, typically a period in the range 10 - 30 hours, 12 - 30 hours, 15 - 30 hours, 15 - 30 hours or 20 - 30 hours. Typically the step of polymerizing the coupling agent comprises polymerizing the coupling agent for a period such as 10, 11, 12, 13, 14, 15, 16, 17, 18, 19, 20, 21, 22, 23, 24, 25, 26, 27, 28, 29 or 30 hours.

Thixatropes such as fumed silica/inorganic thixatropes interfere with the resin bonding to fibres, by adding to interfacial stresses. Organic thixatropes especially the amide type such as Thixatrol Plus and glyceryl stearate products help plasticize then interface and therefore improve bonding. These are preferred products when optimum strength of the composite is required.

Usually the entire external surface of a fiber is substantially coated with the coupling agent.

### Examples of Materials

The following list is by way of exemplification only and is by no means an exhaustive list.

### Monomers and Oligomers

Mono and di and trifunctional acrylates and methacrylates, styrene, and polyallyl ethers.

### GP UPE Laminating Resins

Eterset 2504 PT orthophthalic ethylene glycol fumaric acid resin, Eterset 2597 PT orthophthalic ethylene glycol fumaric acid resin, and NAN YAR LA111 orthophthalic ethylene glycol fumaric acid resin.

### Chemical Resistant UPE resins

Eterset 2733 Ortho NPG fumaric acid chemical resistant resin,

Eterset 2731 Iso NPG fumaric acid chemical resistant resin, NAN YAR GL316 Iso NPG fumaric acid chemical resistant resin, Swancor 901 45, Swancor 911 45, Hetron 922, and Derakane 411 45.

### Flexible Resins

SYN6311 Cray Valley, F61404 - 30 NUPLEX, Swancor 980 Toughened VE

Swancor 981 Flexible VE, and Aromatic Corp flexible VE.

### Cure In Air UPE Resins

ROSKYDAL 500A, and VUP4732 SOLUTIA.

### Toughening Additives

SARTOMER CN962 URETHANE ACRYLATES, SARTOMER CN964 URETHANE ACRYLATES, SARTOMER CN965 URETHANE ACRYLATES and HYCAR REACTIVE LIQUID POLYMER 1300X33 VTBNX.

### Plasticizers

PALAMOL ADIPATES, and DI BUTYL PHTHALATE.

### Cure In Air Additives

SANTOLINK XI 100, PMMA, and PS

### Thixatropes

Rheox THIXIN E, Rheox THIXATROL+, FUMED SILICAS Cabot, Wacker, and TREATED CLAYS.

### Promoters

COBALT OCTOATE, COBALT OXALATE, POTASSIUM OCTOATE, ZIRCONIUM OCTOATE, VANADIUM NAPHTHENATE, COPPER NAPHTHENATE, ZINC OCTOATE, and DMA.

### Inhibitors

ACETYL ACETONE, HYDROQUINONE, and TBHQ.

### Air Release Agents

BYK A515 AND 510, SWANCOR 1317, BEVALOID 6420 and EFKA20.

### Leveling Agent

EFKA 777

### Catalysts

MEKP, CHP, and benzoyl peroxide

### Fibres

Milled glass fibres made from (Vetrotex, Camalyef, SUR100,HPR800), Kevlar/aramid fibres, Wollastonite fibres, Nylon fibres, and calcined surface treated micas

### Fillers

Zenospheres, PVC Powder, and treated organo clays.

### Coupling Agents

Silanes as defined herein.

### The advantages of this Technology over the current art are:

- Fewer people required to produce a part-no laminators required.
- Improved work place health and safety, fewer people exposed to styrene emission, lower styrene levels.
- Much faster mold turnaround, increased productivity.
- Improved chemical resistance.
- Composite can be applied by robot.

The invention provides amongst other things a sprayable/pumpable reinforced resin composite that does not require mechanical consolidation. This composite can be used for fabricating FRP objects such as swimming pools, boats, baths, spas, liquid storage tanks, fibreglass panels, cowlings, etc. It can be used with foaming resins to add mechanical strength, and it is ideally suited to resin injection molding.

### Best Mode And Other Modes For Carrying Out The Invention

### Modification of the Surface of Fibres and Methods of Forming Composites

The standard surface treatment of fibres is not satisfactory. The silane coupling agents used are not applied thoroughly in the case of glass rovings. Commercially available milled glass rovings are manufactured from continuous rovings which have been coated with a sizing material such as EVA or PVA emulsion. This sizing must be removed from the milled glass prior to coating the fibre with coupling agent. And in the case of mineral fibres the coupling agents on commercially available fibres are too low in molecular weight and density on surface of the fibres.

In order to optimize the performance of the composites it is necessary to optimize the application of silanes to modify the chemistry and therefore the forces at the interface of the fibres with the resin. This may be achieved in accordance with the invention by partially polymerizing the silane coupling agents prior to bonding them to the fibres.

In one form this may be achieved by allowing the silanes in aqueous solution to polymerize at suitable pH (pH 7 or greater) for a suitable time, prior to acidification and coupling.

It is theorized that the reaction rate of the higher molecular weight silanes bonding to the fibres is considerably slower due to, among other influences, steric hindrance. For this reason fibres are left soaking in the aqueous silane for up to a day or longer to optimize the population of higher molecular weight silanes on the surface.

The aim is to improve bonding, and stress relieve the interface during polymerization of the resin matrix.

Reducing interfacial stress is critical to optimize the performance of the short fibre composite.

Alternatively (where the fibres are not coated with acid soluble materials such as iron oxides), the coupling agent may be mixed with the fibres at acidified pH (e.g. about pH 3) and the pH gradually raised over 10 - 36 hours to pH 7 +/- 1 pH unit Where the fibres are not coated with acid soluble materials such as iron oxides, the coupling agent may be mixed with the fibres at neutral pH (about pH 7) and the pH maintained or gradually raised over 10-36 hours to pH 9 +/- 1 pH unit

Throughout this specification the terms fibre and fibres are to be taken to include platelet and platelets respectively. Surface treated ceramic fibres such as glass fibres are the most suitable fibres for this invention. Maximum fibre length 6mm, mean fibre length 4mm or less. Alternatively, surface treated platelets such mica platelets (if precoated with a suitable metal oxide such as iron (III) oxide, iron (II) oxide, titanium dioxide, tungsten oxide, hafnium dioxide, nickel oxide, cobalt oxide, manganese dioxide, chromium trioxide, vanadium pentoxide, zinc oxide, molybdenum trioxide, tin dioxide, indium trioxide, niobium pentoxide, tantalum pentoxide, zirconium dioxide etc).

Resins with an elongation to break of greater than 6% are preferred. The most suitable resins are those which are naturally tough and with an elongation at break greater than 10%.

For lining of concrete vessels, and steel vessels to improve their chemical resistance, resins with low elongation at break are suitable.

However for load bearing structures the resins with higher elongation at break give best performance.

As mentioned before the more "elastic" the resin is the stronger and more serviceable the composite.

As the % of reinforcement increases so do the mechanical properties of the composite up to a point, and then the tensile strength of the laminate begins to fall.

Until better bonding is achieved between the resin and the reinforcement, fibre contents of around 30% to 50% by weight appear optimum.

The most suitable resins are epoxy vinyl ester resins, tough vinyl functional urethane resins, tough vinyl functional acrylic resins, and flexible polyester resins - the non plasticized type.

### Formulation Space (a) for Method 1

| | % by Weight |
|---|---|
| Resin | 20% to 89.999% |
| Reactive monomers and or oligomers | 0% to 30% |
| Fibres coated with or oxide coated platelets coated with Coupling Agents Silanes | 10% to 60% |
| Promotors/Catalysts | 0.001% to 10% active ingredient |
| Thixatropic Agents | 0% to 30% |
| Pigments | 0% to 35% |
| UV Stabilizers | 0% to 20% |

### Formulation. Space (b) for Method 1

| | **% by Weight** |
|---|---|
| Reactive Diluents (Vinyl functional monomers and oligomers) | 20% to 89.999% |
| Non Reactive Diluents | 0% to 30% |
| Fibres coated with or oxide coated platelets coated with Coupling Agents Silanes | 10% to 60% |
| Promotors/Catalysts | 0.001% to 10% active ingredient |
| Thixatropic Agents | 0% to 30% |
| Pigments | 0% to 35% |
| UV Stabilizers | 0% to 20% |

### Formulation Space (c) for Method 1

| | **% by Weight** |
|---|---|
| Resin + Reactive Diluents (Vinyl functional monomers + oligomers) | 20% to 89.999% |
| Non Reactive Diluents | 0% to 30% |
| Fibres coated with or oxide coated platelets coated with Coupling Agents Silanes | 10% to 60% |
| Promotors/Catalysts | 0.001% to 10% active ingredient |
| Thixatropic Agents | 0% to 30% |
| Pigments | 0% to 35% |
| UV Stabilizers | 0% to 20% |

These formulations can be sprayed using conventional fibreglass depositors. For Example Glasscraft Venus Gussemer, Binks Sames, etc.

One typical process for coating glass and/or wollastinite fibres comprises:
Coupling solution: to water add 0.1-1wtt%silane coupling agent, adjust pH to pH 3 typically using acetic acid or equivalent, add 50 parts by weight of uncoated glass fibres and/or wollastinite fibres, agitate slowly just to suspend fibres, slowly raising the pH over 24 hours to pH 7, then filter fibres, then dry to >0.1 w1% at about 110°C. Sieve dried, coated fibres through 800µm +/- 200µm screen. Avoid agglomeration of fibres prior to adding to resin. Incorporate fibres into resin gradually to optimise wetting of individual fibres and so as to avoid clumping in the resin. Add promoter and initiator and optionally air release agent(s) and thixotrope(s) and allow a composite to form. The resultant composite, when cured, has improved impact resistance, tensile and flexural strenght as compared to fibre composites where the fibres have not been treated as described above.

Another typical process for coating glass and/or wollastinite fibres comprises:
Coupling solution: to water add 0.1-1 wt%silane coupling agent, adjust (if necessary) pH to pH 7 +/- 1 pH unit to allow partial polymerisation of coupling agent and then adjust to pH 3 typically using acetic acid or equivalent, add 50 parts by weight of uncoated glass fibres and/or wollastinite fibres, agitate slowly just to suspend fibres, slowly raisng pH over 24 hours to pH 7, then filter fibres, then dry to >0.1wt% at about 110°C. Sieve dried, coated fibres through 800µm +/- 200µm screen. Avoid agglomeration of fibres prior to adding to resin. Incorporate fibres into resin gradually to optimise wetting of individual fibres and so as to avoid clumping in the resin. Add promoter and initiator and optionally air release agent(s) and thixotrope(s) and allow a composite to form. The resultant composite has improved impact resistance, flexural strength, and tensile strength as compared to fibre composites where the fibres have not been treated as described above.

A further process for coating glass and/or wollastonite fibres comprises:
Coupling solution: to water add 0.1-1wt%silane coupling agent, adjust (if necessary) pH to pH 7 +/- 1 pH unit to start polymerisation of coupling agent, add 50 parts by weight of uncoated glass fibres and/or wollastonite fibres, agitate slowly just to suspend fibres stir slowly for about 24 hours, then filter fibres, and dry to >0.1 wt% at about 110°C. Sieve dried, coated fibres through 800µm +/- 200µm screen. Avoid agglomeration of fibres prior to adding to resin. Incorporate fibres into resin gradually to optimise wetting of individual fibres and so as to avoid clumping in the resin. Add promoter and initiator and optionally air release agent(s) and thixotrope(s) and allow a composite to form. The resultant composite has improved impact resistance, flexural and tensile strength as compared to fibre composites where the fibres have not been treated as described above.

### Fibre Length Specification

Fibre length maximum 6 mm, typically less than 2mm. Fibre length distribution in the range 6 mm to 1µm.

| Fibre Length Distribution Space | Wt% |
|---|---|
| >=4mm | 0% to 20% |
| <4mm, >=2mm | 0% to 35% |
| <2mm, >=1mm | 0% to 50% |
| <1mm | 0% to 100% |

A typical fibre length space for swimming pools or liquid storage tanks

| | |
|---|---|
| >=4mm | less than 2% by Wt fibres |
| <4mm but >=2mm | Between 5% and 50% by Wt fibres |
| <2mm | Between 5% and 50% by Wt fibres |
| Typical Tensile Strength of Method 1 laminates | 60 to 100MPa |
| Typical Flexural Strength | 80 to 150Mpa |

### Method 2 Applying a laminate that contains chopped rovings but does not require mechanical consolidation.

Method 2 relies on a resin being non air inhibited. This can be achieved in two ways. By incorporating a suitable thermoplastic polymer at approximately 0.3% to 1% by weight of total vinyl functional constituents. Or by adding suitable allyl crosslinkers that stop air inhibition. These are added at concentrations between 4% and 35% of total vinyl functional constituents.

Method 2 allows for fibres to be sprayed onto the mould with the non air inhibited resin as chopped rovings in the normal way. However it is best if the resin contains approximately 15% by volume short fibre liquid composite described in method 1, this is because the short fibre composite has good mechanical properties.

Much less chopped rovings are required to achieve adequate strength when combined with the short fibre composite.

This allows for "resin to glass" ratios greater than 3 to 1. The excess resin available is used to hose down "furries" that is chopped rovings protruding from the wet laminate.

This laminate does not require mechanical consolidation and is potentially stronger than the Method 1 Laminate.

### Deposition is as follows

1. Spray a bed with the liquid composite about 0.1mm to 0.3mm deep.
2. Then spray liquid composite and chopped rovings together thinly leaving about 5% to 10% of the first layer visible
3. Spray the "dry" rovings with liquid composite until completely wetted.
4. Spray rovings and liquid composite as in 2.0 then spray "dry" rovings as in 3.
5. Repeat step 4. until the required thickness is achieved.
6. Allow to cure and demold if necessary.

Please note that this procedure does not require laminating.

If the laminate needs to be chemically resistant then step one above can be repeated until 1.5 two 2.5mm of liquid composite is deposited prior to building up the laminate.

In Method 2. the resin in the liquid composite can be a standard laminating resin as the average composite fibre length is much greater than 4mm.

| | |
|---|---|
| Typical Tensile Strength of Method 2 laminates | >100MPa |
| Typical Flexural Strength | >150MPa. |

### Composite/Laminate Thickness

Any thickness of composite can be achieved simply by applying multiple passes. It is best to use a build between 0.5mm and 1.0mm per pass, this minimizes air entrapment.

### EXAMPLES

Laboratory test laminates have been sprayed using a Binks Sames pressure pot

Binks hand-piece internal catalyst mix. Robinson catalyst system. Operating pressure 80psi - air nebulized.

Mold waxed melamine board.

Small spa mould.

Test sample mold

A small two person spa was made using a Robinson depositor and the resin formulated below.

The coping was reinforced with the Method 2 laminate. The product was successfully demolded. It was able to hold a full volume of water unsupported.

Sprayed and test molded panels have been tested to required ASTM test methods for Tensile Strength, Tensile Modulus, Flexural Strength, and Flexural Modulus.

Typical results for Method 1 laminates are
Flexural Strength 80MPa to 160Mpa
Flexural Modulus 5Gpa to 6Gpa
Tensile Strength 60Mpa to 110Mpa
Tensile Modulus 5GPa to 6GPa.

### Typical composite

| | |
|---|---|
| Swancor 981 flexible Vinyl Ester resin | 100parts |
| Styrene | 10parts |
| Thixatrol + amide thixatrope | 3 parts |
| Cobalt octoate 6% solution | 0.5parts |
| Di methyl analine | 0.15parts |
| Treated wollastonite fibres | 38parts |
| Air release agent Swancor 1317 | 0.7parts |

### Summary of test results

### Type 2 Composite

The weight % for test samples are as follows
10% silane/acrylic surface treated wollastonite or milled glass fibres for composites made using a combination of chopped fibreglass rovings and liquid composite. Resin composite to chopped rovings ratio(eqivalent to resin to glass ratio) 3.5:1 Resins used:

### Impact tests

| | | |
|---|---|---|
| 1. Swancor 980 toughened VE resin | 25kgcm/cm² | Charpy ASTM D256 |
| 2. Swancor 981 flexible VE resin | 22kgcm/cm² | Charpy ASTM D256 |
| 3. F61404/30 Nuplex Flexible UPE resin | 19kgcm/cm² | Charpy ASTM D256 |
| 4. 2504 Eterset GP laminating resin | 8kgcm/cm² | Charpy ASTM D256 |

### Tensile test ASTM D638M

| | |
|---|---|
| 1. Swancor 980 toughened VE resin | 158MPa |
| 2. Swancor 981 flexible VE resin | 134MPa |
| 3. F61404/30 Nuplex Flexible UPE resin | 65MPa |
| 4. 2504 Eterset GP laminating resin | 109Mpa |

### Test Results for Method 1 Composites

Liquid Composite 35%W.V. Silane treated fibres

### Impact Tests

| | | |
|---|---|---|
| 1. Swancor 980 toughened VE resin | 22kgcm/cm² | Charpy ASTM D256 |
| 2. Swancor 981 flexible VE resin | 21kgcm/cm² | Charpy ASTM D256 |
| 3. F61404/30 Nuplex Flexible UPE resin | ??kgcm/cm² | Charpy ASTM D256 |
| 4. 2504 Eterset GP laminating resin | 5gcm/cm² | Charpy ASTM D256 |

Tensile Strength Tests ASTM D638M
25%W.V. Silane acrylic coated fibers

| | |
|---|---|
| LA111 Nan Yar GP laminating resin | 60MPa |
| Swancor 981 | 88MPa |
| F61404 Nuplex flexible UPE | 45MPa (Necking resin too elastic) |
| Swancor 980 | 93MPa |

Flexural Strength ASTM D790M
40% Silane styrene functional coated fibres

| | |
|---|---|
| Swancor 980 | 152MPa |
| F61404/30 | ??MPa (Indeterminate too flexible) |

Disclosed herein is a product including a reinforcing fibre, a process for making a reinforcing fibre, a process for making a plurality of reinforcing fibres, a reinforcing fibre for a curable resin made by the process of the invention, a cured composite, a curable composite, a process for making a cured composite, a method of applying a composite to a surface, and a method of moulding a composite. The uniqueness of this invention has to do with the manufacture and nature of the fibre reinforcement, the nature of the resins used, the way in which the fibres are mixed into the resin and processes for applying the composite to a mould. The composite formed as a result of adding the short fibre reinforcement improves the impact resistance, the tensile strength, flexural strength of the cured composite, substantially simplifies the moulding process, increasing productivity and reducing or eliminating VOCs in the fabrication shop.

The product may be able to be sprayed onto a mould or injected into a mould.

The product when sprayed onto an open mould does not require mechanical consolidation or when injected into a closed mould does not require any additional fibre reinforcement.

The product when sprayed onto an open mould does not require mechanical consolidation to optimise the properties of the composite.

Also disclosed is a method for preparing the above product in which the reinforcing fibre is milled so that the mean fibre length is less than 5mm. These fibres are then treated with a coupling agent, dissolved in a suitable solvent. The fibres are agitated in suspension in the coupling agent solution for a period of hours so that the entire surface of the fibres are coated in the coupling agent. The fibres are then filtered and dried. They are then sieved to break up agglomerates. The dried sieved fibres are then added to a liquid resin so that all the fibres are wetted individually, without incorporating air. The liquid resin is formulated so that it can react chemically with the coupling agent on the fibres.

This product is then catalysed, applied to a mould and allowed to cure.

In the above method the reinforcing fibres may be glass -fibres, which are free of all surface pre treatment. These fibres are preferably milled so that they have a mean fibre length of approximately 3mm with less than 1% fibres greater than 4mm. An organo functional silane is then dissolved in water at pH of 3 and at a concentration of less than 1%. The preferred organo functional silanes are those that contain a carbon carbon double bond in their structure. The fibres are then added to the solution and agitated in suspension for a period of hours so that all the available surface of the fibre is coated with the silane. Optionally the pH can be raised after this period to between pH 7 and pH 10 so that the remaining silane molecules in solution will react with the bound silanes to produce silanol oligomers. The fibres are then on the surface of the fibres, filtered from solution and dried. They are then sieved to break up agglomerates and suspended in suitable liquid resins such as unsaturated polyester resins, vinyl ester resins, acrylic resins, vinyl functional resins and combinations. The liquid resin is formulated so that it can react chemically with the coupling agent on the fibres.

This product is then applied to a mould and allowed to cure.

The polymerisable resin may be a resin with an elongation at break greater than 10%. These are the preferred resins because they produce products with superior physical properties.

## Claims

1. A process for making a plurality of reinforcing fibres for reinforcing a curable resin, said process comprising:
• removing sizing agent from a plurality of glass fibres of length between 6mm and 1 micron; and
• partially polymerising a silane coupling agent and bonding said polymerised silane coupling agent to the glass fibres, said coupling agent being a coupling agent for coupling said fibres with said resin;
wherein the step of partially polymerising and bonding comprises:
• allowing the silane in aqueous solution to polymerise at pH 7 or greater and then acidifying; or
• mixing the silane with the fibres, wherein the fibres are not coated with acid soluble materials, at acidic pH and gradually raising over 10 - 36 hours the pH to 7+/-1; or
• mixing the silane with the fibres, wherein the fibres are not coated with acid soluble materials, at neutral pH and maintaining the pH or gradually raising over 10 - 36 hours gradually raising the pH to 9+/-1.

2. The process of claim 1 wherein the coupling agent is an organofunctional silane containing a carbon-carbon double bond.

## Patentansprüche

1. Verfahren zur Herstellung einer Mehrzahl von Verstärkungsfasern zur Verstärkung eines härtbaren Harzes, wobei das Verfahren:
- das Entfernen von Schlichtemittel aus einer Vielzahl von Glasfasern mit einer Länge zwischen 6 mm und 1 Mikrometer und
- das teilweise Polymerisieren eines Silankopplungsmittels und das Binden des polymerisierten Silankopplungsmittels an die Glasfasern umfasst, wobei das Kopplungsmittel ein Kopplungsmittel zum Koppeln der Fasern mit dem Harz ist;
wobei der Schritt des teilweisen Polymerisierens und des Bindens:
- das Ermöglichen der Polymerisation des Silans in wässeriger Lösung bei pH 7 oder mehr und dann Ansäuern oder
- das Mischen des Silans mit den Fasern, wobei die Fasern nicht mit sauren löslichen Materialien beschichtet sind, bei saurem pH und das allmähliche Erhöhen des pH über 10 bis 36 Stunden auf 7 +/- 1 oder
- das Mischen des Silans mit den Fasern, wobei die Fasern nicht mit sauren löslichen Materialien beschichtet sind, bei neutralem pH und das Halten des pH oder das allmähliche Erhöhen des pH über 10 - 36 Stunden auf 9 +/- 1 umfasst.

2. Verfahren nach Anspruch 1, wobei das Kopplungsmittel ein organofunktionelles Silan ist, das eine Kohlenstoff-Kohlenstoff-Doppelbindung enthält.

## Revendications

1. Procédé permettant de fabriquer une pluralité de fibres de renforcement pour renforcer une résine durcissable, ledit procédé comprenant le fait de :
- éliminer un agent d'encollage à partir d'une pluralité de fibres de verre d'une longueur comprise entre 6 mm et 1 micron ; et
- polymériser en partie un agent de couplage de silane et lier ledit agent de couplage de silane polymérisé aux fibres de verre, ledit agent de couplage étant un agent de couplage permettant de coupler lesdites fibres avec ladite résine ;
dans lequel l'étape consistant à polymériser partiellement et à lier comprend le fait de :
- permettre au silane dans une solution aqueuse de polymériser à un pH de 7 ou plus, et ensuite de l'acidifier ; ou
- mélanger le silane avec les fibres, dans lequel les fibres ne sont pas recouvertes de matériaux solubles dans de l'acide à un pH acide et s'élevant progressivement sur une durée de 10 à 36 heures au pH de 7+/-1 ; ou
- mélanger le silane avec les fibres, dans lequel les fibres ne sont pas recouvertes de matériaux solubles dans l'acide à un pH neutre et maintenir le pH ou l'élever progressivement, sur une durée de 10 à 36 heures, au pH de 9+/-1.

2. Procédé selon la revendication 1 dans lequel l'agent de couplage est un silane organofonctionnel contenant une double liaison carbone-carbone.
